Europäisches Patentamt

European Patent Office

Office européen des brevets

(19)

(11) Veröffentlichungsnummer : **0 065 807**
**B1**

(12) **EUROPÄISCHE PATENTSCHRIFT**

(45) Veröffentlichungstag der Patentschrift :
28.08.85

(21) Anmeldenummer : 82200626.8

(22) Anmeldetag : 21.05.82

(51) Int. Cl.⁴ : **A 22 C 11/02**

(54) Verfahren zum Füllen und Verschliessen von am Ende verschlossenen Wursthüllen auf einer kombinierten Füll- und Verschliessmaschine.

(30) Priorität : 27.05.81 DE 3121101

(43) Veröffentlichungstag der Anmeldung :
01.12.82 Patentblatt 82/48

(45) Bekanntmachung des Hinweises auf die Patenterteilung : 28.08.85 Patentblatt 85/35

(84) Benannte Vertragsstaaten :
DE

(56) Entgegenhaltungen :
DE-A- 2 054 441
DE-A- 2 254 943
DE-A- 2 420 202
DE-B- 1 165 480
DE-B- 2 645 714
FR-A- 2 089 747
FR-A- 2 297 572
US-A- 2 070 850
US-A- 3 853 999

(73) Patentinhaber : Niedecker, Herbert, Dipl.-Ing.
Am Ellerhang 6
D-6240 Königstein 2 (DE)

(72) Erfinder : Niedecker, Herbert, Dipl.-Ing.
Am Ellerhang 6
D-6240 Königstein 2 (DE)

(74) Vertreter : Fischer, Ernst, Dr.
Reuterweg 14
D-6000 Frankfurt am Main 1 (DE)

## Beschreibung

Die Erfindung betrifft ein Verfahren zum Füllen und Verschliessen einer an einem Ende verschlossenen Wursthülle auf einer kombinierten Füll- und Verschließmaschine, wobei vor dem Verschließen des Wurstzopfes am anderen Ende der Wursthülle diese nicht auf das mögliche Aufnahmevolumen gefüllt wird.

Bei der Herstellung von Würsten ist es in vielen Fällen erwünscht, daß die Wurst im verbrauchsfertigen Zustand einen anderen als den üblicherweise runden Querschnitt aufweist. Häufig wird ein rechteckiger oder quadratischer Querschnitt, z. B. als Belag für Toastbrot, erwünscht. Für eine solche sogenannte Vierkantwurst wird die gefüllte Wursthülle nach dem Verschließen in einer entsprechenden Form zu ihrem endgültigen Querschnitt gepreßt und hierin z. B. durch Kochen stabilisiert. Da ein rechteckiger Querschnitt einen größeren Umfang hat als ein runder Querschnitt, darf eine solche Wursthülle nicht voll gefüllt sein. Die nicht auf das mögliche Aufnahmevolumen gefüllte, also schlaffe Wursthülle muß aber im wesentlichen luftfrei sein, weil Lufteinschlüsse einen schädlichen Einfluß auf das Füllgut haben und zu einem unerwünschten Wurstbild führen würden.

Um nur schlaff gefüllte, im wesentlichen luftfreie, verschlossene Wursthüllen herzustellen, ist es bekannt, zum Verringern des Aufnahmevolumens der Hülle während des Füllvorgangs ein den Aufnahmequerschnitt der Wursthülle verkleinerndes Element auf dem sich an das verschlossene Ende der Wursthülle anschließenden Bereich anzubringen (DE-A-22 54 943). Diese Arbeitsweise hat aber den Nachteil, daß sie verhältnismäßig zeitaufwendig ist, weil die Bedienungsperson für die kombinierte Füll- und Verschließmaschine auch noch die Hülse auf den Darmabschnitt aufstecken und sie beim Einlegen in die Form wieder abnehmen muß.

Außerdem ist es bekannt (DE-A-22 10 054, DE-A-20 54 441), zum Herstellen von rechteckigen Würsten mit verhältnismäßig kleinem Querschnitt den gefüllten Wurstdarm durch ein rechtwinklig begrenztes Förderband und eine Dosierwalze oder ein zweites Förderband zu verformen und anschließend mittels einer Abteilwalze oder Nocken gefüllte rechteckige Wurstabschnitte herzustellen. Diese Arbeitsweise hat jedoch den Nachteil, daß sie nur für verhältnismäßig dünne, jedenfalls nicht für größere Darmkaliber — z. B. für Toastbelag — geeignet ist. Außerdem erlaubt diese Arbeitsweise nicht das Füllen von Einzelabschnitten, die bei verhältnismäßig großem Kaliber häufig angewandt werden. Der Erfindung liegt daher die Aufgabe zugrunde, ein Verfahren der eingangs geschilderten Art sowohl bei der Herstellung von kleinen und großen Würsten aus Einzelabschnitten als auch von einer Darmraupe verwendbar zu machen.

Diese Aufgabe wird erfindungsgemäß dadurch gelöst, daß ein Teil der Wursthülle zunächst mit der vorgesehenen Füllmenge prall gefüllt wird, danach die Verdrängerscheren der Verschließmaschine so weit geschlossen werden, daß noch zusätzliches Hüllenmaterial nachgezogen werden kann, dann die gefüllte Wurst vor dem Verschließen mittels Preßbacken zusammengedrückt wird, wobei gleichzeitig das zur Aufnahme des durch die Preßbacken verdrängten Wurstvolumens benötigte zusätzliche Hüllenmaterial durch die Verdrängerscheren nachgezogen wird, und schließlich der Wurstzopf vollständig gebildet und verschlossen wird. Das erfindungsgemäße Verfahren hat den Vorteil, daß durch das Nachziehen des Hüllenmaterials durch die geschlossenen Verdrängerscheren ein im wesentlichen luftfreies zusätzliches Aufnahmevolumen zur Verfügung gestellt wird, das zur Verformung der gefüllten Wurst in die gewünschte rechteckige Form benötigt wird. Dies wird besonders dann sichergestellt, wenn beim Nachziehen des Füllmaterials der Innendruck der gefüllten Wurst aufrechterhalten wird, und zwar indem nur so viel Hüllenmaterial nachgezogen wird, wie durch das Zusammendrücken der gefüllten Wurst mittels der Preßbacken benötigt wird. Das erfindungsgemäße Verfahren ist sowohl für kleine wie für große Wurstkaliber anwendbar und kann bei Einzeldarmabschnitten und beim Füllen von der Darmraupe angewandt werden, also auch bei Verschließmaschinen, bei denen zwei Verschlußklammern in einem gewissen Abstand voneinander gesetzt werden, um gleichzeitig das Ende der einen und den Anfang der nächsten Wursthülle zu verschließen.

Beim erfindungsgemäßen Verfahren werden die Verdrängerscheren der Verschließmaschine in bekannter Weise geschlossen; dabei muß jedoch sichergestellt sein, daß die Verdrängerscheren dem zopfartig zusammengefaßten Ende der Wursthülle genügend Spielraum geben, damit das zusätzliche Hüllenmaterial nachgezogen werden kann. Dies wird entweder dadurch erreicht, daß bei Verschließmaschinen, bei denen der zu verschließende Zopf erst durch die auf den Zopf gesetzte Verschlußklammer oder durch einen Vorverdränger gebildet wird, der Verschließstempel zunächst nur einen Teilhub ausführt oder ein Vorraffer entsprechend eingesetzt wird. Bei Verschließmaschinen, bei denen der Zopf vollständig durch die Verdrängerscheren gebildet wird, wird bei deren Verschließen zunächst nur ein Teilhub vorgenommen, um ein Nachziehen des Hüllenmaterials zu ermöglichen und erst anschließend wird der endgültige Zopf durch Schließen der Verdrängerscheren gebildet, worauf der Zopf durch die Verschlußklammer verschlossen wird.

Die Preßbacken, mit denen die gefüllte Wurst zusammengedrückt wird, können so einstellbar sein, daß die gefüllte Wurst das gewünschte Füllvolumen erhält. Für jede gewünschte Wurstgröße werden die Preßbacken entsprechend eingestellt oder ausgetauscht.

Es zeigen :

Figur 1 eine Draufsicht auf die Vorrichtung zur Ausführung des erfindungsgemäßen Verfahrens nach beendetem Füllvorgang ;

Figur 2a die gleiche Vorrichtung nach dem Schließen der Verdrängerscheren und beginnendem Preßvorgang ;

Figur 2b einen Schnitt A-A der Fig. 2a ;

Figur 3a die gleiche Vorrichtung nach beendetem Preß-, Abzieh- und Verschließvorgang ;

Figur 3b einen Schnitt B-B der Fig. 3a ;

Figur 4 die gleiche Vorrichtung in Abwurfstellung der schlaff gefüllten und verschlossenen Wurst ;

Figur 5a eine Draufsicht auf die Vorrichtung wie in Fig. 2a, jedoch mit teilweise geschlossenen Verdrängerscherenpaaren zum Verarbeiten von einer auf dem Füllrohr gerafften Schlauchhülle ;

Figur 5b einen Schnitt C-C der Fig. 5a ;

Figur 6 eine Vierkantform mit einer Wurst nach ihrer Pressung zu einem annähernd quadratischen Querschnitt.

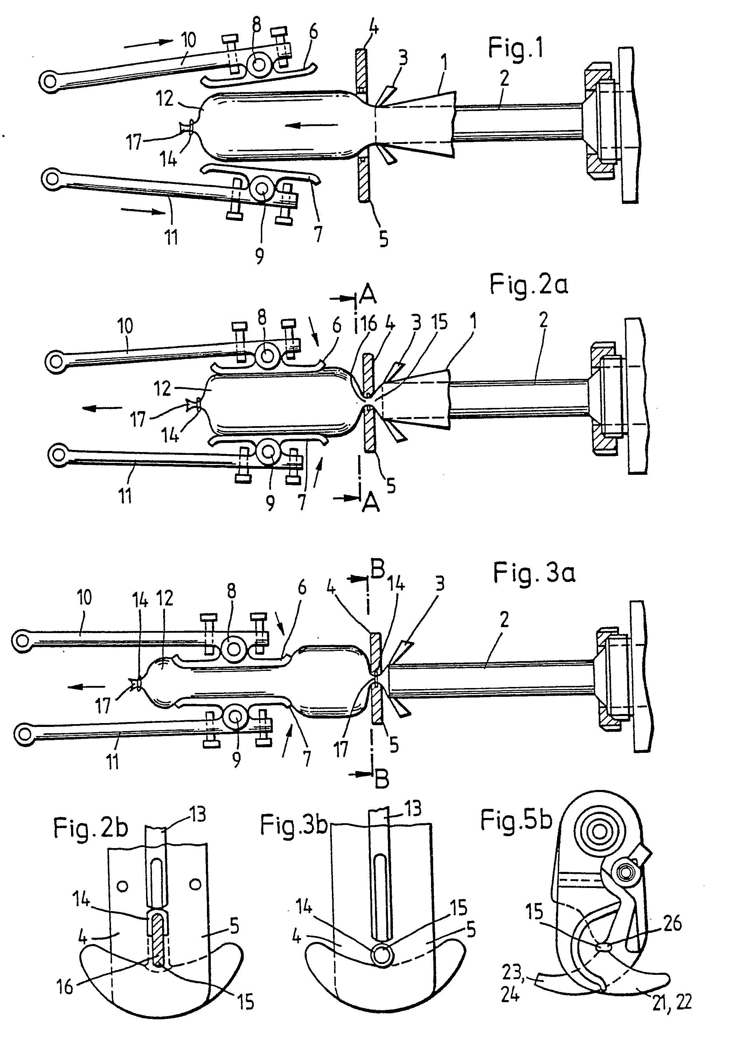

Die Fig. 1 bis 5 zeigen eine Vorrichtung zur Ausführung des erfindungsgemäßen Verfahrens. In Fig. 1 ist eine an einem Ende bereits verschlossene Wursthülle 1 auf das Füllrohr 2 einer bekannten Wurstfülleinrichtung aufgezogen. Das Füllrohr 2 befindet sich an einem Mehrfachtüllenkopf, der an der Füllmaschine angebracht ist. Das Abziehen der Wursthülle 1 erfolgt beim Füllen von Wurstbrät durch den Füllvorgang. Dabei wird die Wursthülle 1 zwischen dem Füllrohr 2 und einer Darmbremse 3 in Füllrichtung abgezogen.

Mit der Füllmaschine, an der das Füllrohr 2 angebracht ist, wird eine bekannte Verschließmaschine mit Verdrängerscheren 4, 5 kombiniert. Der Füllvorgang ist in Fig. 1 abgeschlossen, wobei auf dem Füllrohr 2 noch ein ungefüllter Restabschnitt der Wursthülle 1 vorhanden ist.

In Fig. 2a sind die Verdrängerscheren 4, 5 hinter der gefüllten Wurst 12 geschlossen. Die Preßbacken 6, 7, die über Gelenke 8, 9 an einem Gestänge 10, 11 angebracht sind, legen sich gegen die prall gefüllte Wurst 12. Durch dieses Zusammenpressen und gleichzeitiges Abziehen der Wurst 12 mit den Preßbacken 6, 7 in Füllrichtung wird der Restabschnitt der Wursthülle 1 vom Füllrohr 2 durch die geschlossenen Verdrängerscheren 4, 5 nachgezogen, um das durch den Preßvorgang verdrängte Füllgut aufzunehmen. Dadurch entsteht für die gleiche Füllmenge ein vergrößertes Aufnahmevolumen der Wursthülle 1.

Fig. 2b zeigt im Schnitt A-A (Fig. 2a) die geschlossenen Verdrängerscheren 4, 5. Der Verschließstempel 13 mit der Verschlußklammer 14 hat einen Teilhub ausgeführt, wodurch der Zopf 15 von der Verschlußklammer 14 so vorgerafft wird, daß die restliche Wursthülle noch durch das Langloch 16 nachgezogen werden kann.

In Fig. 3a ist der Preß- und Abziehvorgang beendet und die Wurst 12 mit der Verschlußklammer 14 auch am hinteren Zopf 17 verschlossen. Fig. 3b zeigt im Schnitt B-B (Fig. 3a) Verschließstempel 13 kurz vor Abschluß des Verschließvorgangs.

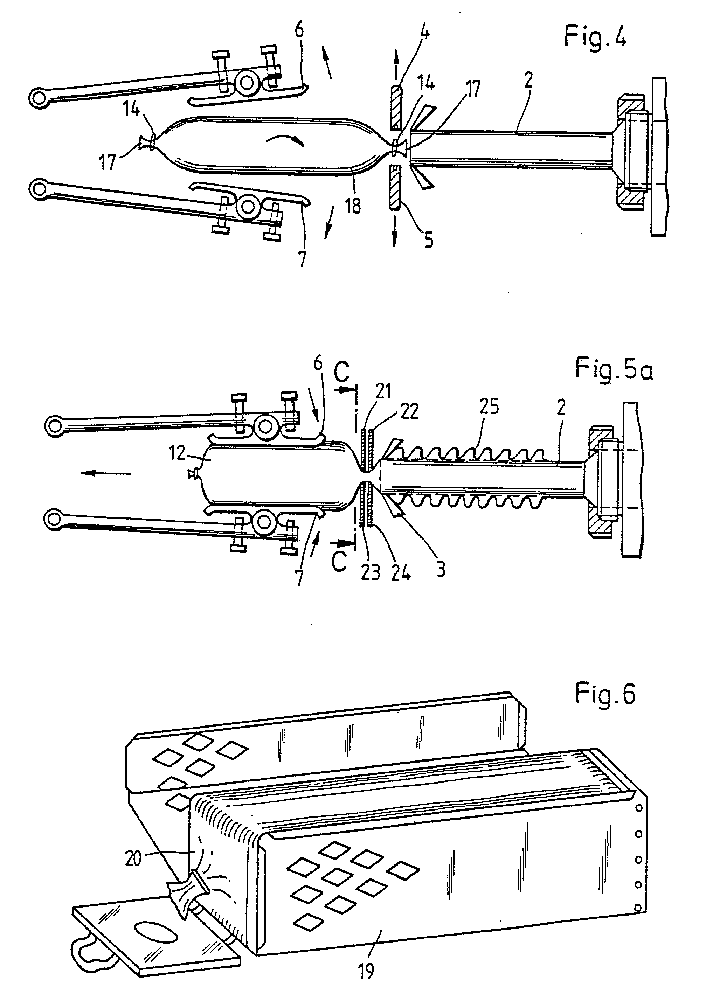

In Fig. 4 sind die Verdrängerscheren 4, 5 der Verschließmaschine wieder geöffnet und die Preßbacken 6, 7 in ihre Ausgangslage gebracht. Die schlaff gefüllte und verschlossene Wurst 18 wird von der Verschließmaschine abgeworfen und kann nun von der Metallform 19 (Fig. 6) aufgenommen und zu einer Vierkantwurst 20 gepreßt werden.

Fig. 5a zeigt eine Draufsicht der Vorrichtung gemäß der Fig. 2a, jedoch mit Verdrängerscherenpaaren 21, 22 und 23, 24 und aufgezogener Darmraupe 25, von der die Würste einzeln oder in Ketten hergestellt werden können, und die dann mit zwei Verschlußklammern in einem gewissen Abstand verschlossen werden.

Fig. 5b zeigt einen Schnitt C-C (Fig. 5a), wobei die Verdrängerscherenpaare 21, 22 und 23, 24 fast geschlossen sind. Dadurch wird das Langloch 26 gebildet, durch das der vorgeraffte Darmzopf 15 gerade noch nachrutschen kann. Nachdem das Zusammenpressen und Abziehen des noch benötigten Teils der Darmraupe 25 beendet ist, werden die Verdrängerscherenpaare 21, 22 und 23, 24 vollständig geschlossen und die Verschlußklammer ähnlich wie Fig. 3a und b um den Zopf 15 verschlossen.

## Patentansprüche

1. Verfahren zum Füllen und Verschließen von an einem Ende verschlossenen Wursthüllen auf einer kombinierten Füll- und Verschließmaschine, wobei vor dem Verschließen des Wurstzopfes am anderen Ende der Wursthülle diese nicht auf das mögliche Aufnahmevolumen gefüllt wird, dadurch gekennzeichnet, daß ein Teil der Wursthülle zunächst mit der vorgesehenen Füllmenge prall gefüllt wird, danach die Verdrängerscheren der Verschließmaschine so weit geschlossen werden, daß noch zusätzliches Hüllenmaterial nachgezogen werden kann, dann die gefüllte Wurst vor dem Verschließen mittels Preßbacken zusammengedrückt wird, wobei gleichzeitig das zur Aufnahme des durch die Preßbacken verdrängten Wurstvolumens benötigte zusätzliche Hüllenmaterial durch die Verdrängerscheren nachgezogen wird, und schließlich der Wurstzopf vollständig gebildet und verschlossen wird.

2. Verfahren nach Anspruch 1, dadurch gekennzeichnet, daß beim Nachziehen des Hüllenmaterials der Innendruck der gefüllten Wurst aufrechterhalten wird.

3. Verfahren nach Anspruch 1 oder 2, dadurch gekennzeichnet, daß das andere Ende der Wursthülle vor dem Zusammendrücken der gefüllten Wurst mittels Vorraffer oder durch einen Teilhub des Verschließstempels mit der Verschlußklammer zopfartig zusammengefaßt wird.

4. Verfahren nach Anspruch 1 oder 2, dadurch gekennzeichnet, daß vor dem Zusammendrücken der gefüllten Wurst die Verdrängerscheren nur einen Teilhub zum Vorraffen des Zopfes ausführen, um ein Nachziehen des Hüllenmaterials zu ermöglichen, und sie erst nach dem Nachziehen des Hüllenmaterials vollständig geschlossen werden.

## Claims

1. A process of filling and closing a sausage casing which is closed at one end on a combined filling and closing machine, wherein the sausage casing is filled to less than its entire volumetric capacity before it is part of the sausage casing is first tightly filled with the intended quantity of filling, the displacing shears of the closing machine are then closed to such an extent that additional casing material can be pulled along before the filled sausage casing is closed the sausage is compressed by pressing jaws and the additional sausage casing material which is required to accommodate the sausage meat displaced by the pressing jaws is simultaneously pulled along by the displacing shears, and the end portion of the sausage is finally completely formed and closed.

2. A process according to claim 1, characterized in that the internal pressure of the filled sausage is maintained as the sausage casing material is pulled along.

3. A process according to claim 1 or 2, characterized in that before the compressing of the filled sausage the other end of the sausage casing is constricted by means of a preliminary constricting member or by a partial closing stroke of the closing punch carrying the closing clip.

4. A process according to claim 1 or 2, characterized in that before the filled sausage is compressed the displacing shears perform only a partial closing stroke for a preliminary constricting of a portion of the sausage casing so that additional sausage casing material can be pulled along as the sausage is compressed and the displacing shears are completely closed when the sausage has been compressed and the sausage casing material has been pulled along.

## Revendications

1. Procédé pour remplir et pour fermer des boyaux à saucisse fermés à l'une de leurs extrémités sur une machine combinée de remplissage et de fermeture, le boyau à saucisse n'étant pas, avant la fermeture de la tresse de la saucisse à l'autre extrémité du boyau à saucisse, rempli dans tout son volume possible, caractérisé en ce qu'il consiste à remplir d'abord à plein une partie du boyau à saucisse de la quantité prévue, à fermer ensuite les pinces de refoulement de la machine de fermeture au point où de la matière supplémentaire du boyau peut encore être tirée, à comprimer ensuite, avant la fermeture, au moyen de mâchoires de serrage la saucisse remplie en tirant en même temps par les pinces de refoulement la matière supplémentaire du boyau qui est nécessaire à la réception du volume de saucisse refoulé par les mâchoires de serrage et à former enfin la tresse de la saucisse complètement et la fermer.

2. Procédé selon la revendication 1, caractérisé en ce qu'il consiste à maintenir la pression interne de la saucisse remplie lorsque l'on tire la matière du boyau.

3. Procédé selon la revendication 1 ou 2, caractérisé en ce qu'il consiste à réunir, à la manière d'une tresse avec l'agrafe de fermeture, l'autre extrémité du boyau à saucisse, au moyen de dispositifs de retroussement ou par une course partielle du poinçon de fermeture, avant de comprimer la saucisse remplie.

4. Procédé selon la revendication 1 ou 2, caractérisé en ce qu'il consiste, avant de comprimer la saucisse remplie, à ne faire effectuer aux pinces de refoulement qu'une course partielle pour retrousser la tresse, afin de permettre de tirer la matière du boyau, et à ne les fermer entièrement qu'après avoir tiré la matière du boyau.

Fig.1

Fig.2a

Fig.3a

Fig.2b

Fig.3b

Fig.5b

Fig. 4

Fig. 5a

Fig. 6